**Europäisches Patentamt**

**European Patent Office**

**Office européen des brevets**

(19)

(11) **EP 1 281 862 A1**

(12) ## EUROPEAN PATENT APPLICATION

(43) Date of publication:
**05.02.2003 Bulletin 2003/06**

(51) Int Cl.⁷: **F03B 17/06**, F03B 13/18

(21) Application number: **01118275.5**

(22) Date of filing: **30.07.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Grassmann, Hans, Dr.
33100 Udine (IT)**

(72) Inventor: **Grassmann, Hans, Dr.
33100 Udine (IT)**

(74) Representative: **Hirsch, Peter, Dipl.-Ing.
Klunker Schmitt-Nilson Hirsch
Winzererstrasse 106
80797 München (DE)**

(54) ## Run-of-river turbine

(57) Disclosed is an arrangement to extract energy from a flow of fluid, comprising a turbine (101) adapted to extract kinetic energy from the flow, said turbine (101) being inserted into a dam (210), and said turbine (101) having operational characteristics such that due to the operation of the turbine (101) a difference of the water levels on both sides of the dam (210) before and after the turbine (101) is created. Furthermore, another arrangement is disclosed to extract energy from a flow of fluid, comprising a turbine (101) which is adapted to extract energy from the flow, said turbine (101) being inserted into a spatial structure of fluid flow which is adapted to create a field of low pressure behind the turbine (101) by means of an accelerated flow of liquid such that a difference in the height of the level of the surface of the fluid is maintained before and after the turbine (101). Also a corresponding method of extracting energy from a flow of fluid by means of a turbine (101), the turbine (101) being adapted to extract potential energy from the flow is disclosed.

**Fig. 3a**

**Description**

This invention relates to a method of extracting energy from a fluid and as well to an arrangement to extract energy from a fluid.

The need for using renewable energies wherever economically feasible is generally accepted by now. Important sources of renewable energies are available in flows of air (wind) or water (river, tidal currents) where part of the kinetic or potential energy of the fluid can be extracted by means of wind or water turbines. All these turbines work by lowering the pressure of the fluid flowing through them. The power they can extract from the fluid is proportional to this pressure drop and to the velocity of the flow through the turbine ($P=\Delta pvS$, with P= power, $\Delta p$= pressure drop, v= velocity of flow, S= active area of the turbine) :

Extraction of kinetic energy: In wind turbines and in some types of water turbines the drop of pressure within the turbine is equal to an increase in pressure in the vicinity of the turbine caused by the deceleration of the fluid according to the law of Bernoulli ($p + 1/2\rho v^2 =$ constant, with p= static pressure, $\rho$= density, v= velocity of the fluid; gravitation is ignored here). We note that the term $\rho g\Delta h$ (to be discussed later) which is present in the generalised Bernoulli equation (for a discussion of the Bernoulli equation see e.g. Gerthsen, Kneser, Vogel: "Physik", Berlin u.a.: Springer-Verlag) is not needed for the description of these devices. The fluid reduces its velocity (from the initial velocity of the free flow $v_1$ to the final velocity $v_2$) when approaching and/or leaving the turbine and therefore reduces its kinetic energy density from $1/2\rho v_1^2$ to $1/2\rho v_2^2$. Therefore, it is commonly said and we will refer to this kind of turbine in the following by saying "the turbine extracts kinetic energy from the fluid".

For instance, if a flow of water with initial velocity of 0,50 m/s (which is a typical value for a river or a tidal current) is decelerated to 0,25 m/s, the corresponding drop in pressure at the turbine is 92,5 Pa.

Extraction of potential energy: Currently, most water turbines operate between a reservoir of water at high pressure and one at low pressure, where the pressure difference $\Delta p$ originates from the gravitational force: the water levels of the reservoirs have a difference $\Delta h$ in height (for instance with respect to the sea level) which results in a pressure difference of $\Delta p = \rho g\Delta h$ which can be exploited by the turbine (with $\rho$= density, g= gravitational constant).

In some types of turbines the water is accelerated within the turbine (by its pressure) to high velocities (Impulse turbine ("Aktionsturbine"), for example Pelton turbine). However, the kinetic energy of the fluid outside of the turbine - that is, in each of the two reservoirs of water - is not relevant for the operation of the turbine. In this sense it is commonly said and we will refer to this type of turbine in the following by saying "the turbine extracts potential energy from the water".

Typical values for $\Delta h$ in current applications are about approximately 5 to 100 meter. Kaplan turbines can go to values of $\Delta h$ as low as 1 m but not lower. For this rather modest value of $\Delta h$= 1 m the corresponding pressure drop at the turbine is $10^4$ Pa (for water). This has to be compared to above mentioned pressure drop of 93 Pa for the case of a turbine which extracts kinetic energy.

Most of the region between about 100 Pa and 10.000 Pa is not accessible to present technology. There is a clear need to create a device which can cover this pressure range. However, the invention is not limited to this pressure range.

We note that there is no fundamental reason of physics prohibiting the exploration of this pressure range. The restrictions to present technology are of two reasons:

1. Restriction of a technological nature. For instance, the design of the Kaplan turbine is in close analogy to the one for ship turbines with the main difference that the Kaplan turbine decelerates the water while the propeller of a ship accelerates it. For the ship to move through the water at a given velocity (say 20 knots, about 10 m/s) the ship propeller must accelerate the water to an even higher velocity. These high velocities go along with a correspondingly high pressure drop at the turbine. And this feature is than in analogy also to be found for the Kaplan turbine.

2. Even if those technological limitations would not exist there would be a problem of economy. Existing devices are too expensive to make use of low dams in an economically reasonable way: For small $\Delta h$, the active surface of a turbine of given power would need to be very large. There would be, for instance, a need to use very large Kaplan turbines which are very expensive also due to their need for a sophisticated technical support system for their operation. A turbine which shall operate at low $\Delta h$ must be of very simple construction and operation in order to be economical.

Present technology also has disadvantages from an ecologic point of view: sometimes the operator of a dam may totally block or strongly reduce the water flow through the dam, in order to fill up the reservoir of water. This is fatal for some life forms on one side of the dam. In addition, dams prevent fish from migration.

A further object of the invention is to allow the use of dams of any height h - down to arbitrarily small values of h - for obtaining energy from a flow of water. The invention allows even for large openings in the dam such that for instance ships can pass the energy extracting system without compromising the power output of the device: in this scenario the turbine can extract not only energy from the flow of water passing through it but also from a neighbouring flow of water which does not enter the turbine at all.

These and other objects are solved according to the invention by the subject-matter as given with independent claims 1, 3, 4, 12, and 13. The other dependent claims exhibit spcific improvements.

In difference to existing devices the invention allows to extract energy from rivers or from tidal currents without the need to construct dams of large height and it offers the possibility to create and to make use of differences in water levels without the construction of a dam. This offers advantages not only from an economic but also from an ecologic point of view.

From conventional devices which extract kinetic energy from a free flow of water the invention is different in so far as it is able to build up a pressure difference before and after the device which is larger than the pressure drop which results from a deceleration of the fluid, $1/2\rho(v_1{}^2-v_2{}^2)$. From arrangements as are currently used to exploit the potential energy of water the arrangement according to the invention is in particular different in so far as it can operate at much lower pressure differences; corresponding to the water levels before and after the turbine may be different by as little as a few centimetres. In the arrangement in accordance with the invention there is - in difference to existing technology - also no need for a guide wheel / impeller ("Leitrad"), pipings, tubes, valves or shutters for its operation.

In difference to existing devices, it is then possible to operate the arrangement in accordance with the invention without a static dam but to rather create a pressure difference before and after the device dynamically.

These features allow to use the energy of fluids in situations where existing technologies cannot be applied. For instance, it is possible to make use of the tidal fluctuations of the sea level in a bay at places where the tide is not high enough to allow for the construction of a conventional tidal energy plant. Or it is possible to extract energy from rivers also at places where for reasons of geography or habitation the construction of a high dam is excluded.

The invention will now be explained more in detail by referring to a number of implementations, thereby using the drawing.

**Fig. 1a** shows a plain view on an example of a turbine which extracts kinetic energy from a flow of air or water.

**Fig. 1b** shows the same turbine as depicted in **Fig. 1a,** embedded in a structure at its outer circumference which permits to couple it to a generator.

**Fig. 1c** shows an angle Θ between a blade and the direction of a fluid flow.

**Fig. 2a** shows a cross circuit of a turbine inserted into a dam in water acting as fluid; the turbine not rotating.

**Fig. 2b** shows a cross-circuit through the turbine depicted in **Fig. 2a**, the turbine now operating.

**Fig. 3a** shows an arrangement to create a difference in water level and to extract energy from it without the use of a dam. A flow of water is shown from above. At point A the water level is higher than at point B. In a region 340 the velocity of the flow is increased.

**Fig. 3b** shows a schematic cross section through a conventional dam combined with a device in accordance to the invention.

**Fig. 3c** shows the arrangement depicted in **Fig. 3b** seen from above.

**Fig. 3d** shows schematic cross-sections of the water flow in the arrangement depicted in **Figs. 3b, 3c**.

**Fig. 4** shows an extended version of the arrangement shown in **Fig. 3**.

**Fig. 5** shows an asymmetrical configuration of the arrangement depicted in Fig. 3 which allows to operate in a current of changing direction, for instance caused by tide. Water flow into the direction indicated by the arrow. The right channel is blocked by a shutter. This shutter might for instance rotate freely around the point (P), and would then automatically block the flow in an appropriate way. (The corresponding shutter at the left side is not shown in the drawing.)

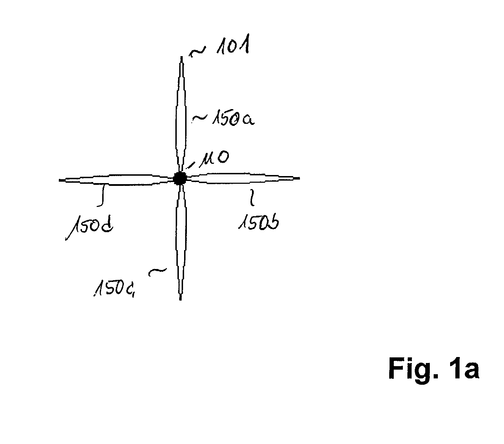

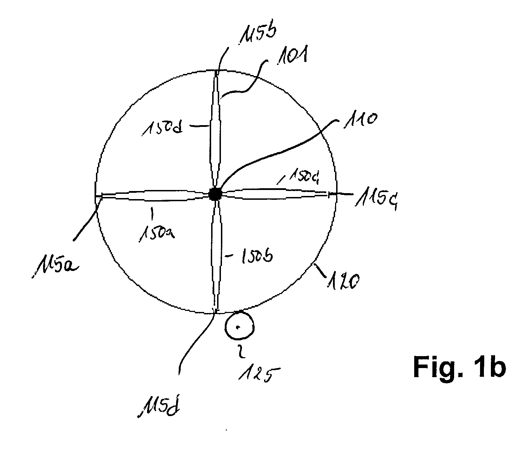

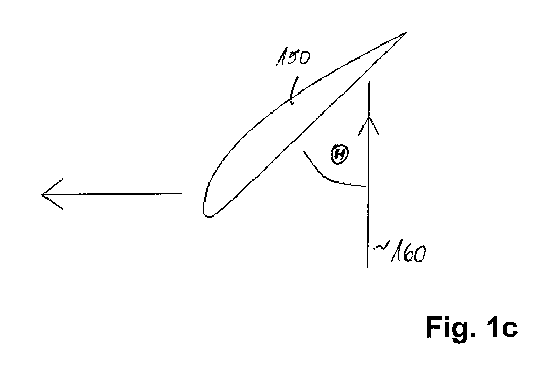

In **Fig. 1a,** a turbine 101 is used which can extract kinetic energy from a flow of a fluid. The turbine 101 has its axis 110 in parallel to the direction of the flow of the fluid. In **Fig. 1b,** the electricity generator 125 does not need to be mounted on the axis 110 of the turbine 101. Rather it could be connected to the outside 120 of the turbine 101. In **Fig. 1c,** a slowly rotating turbine 101 has propeller blades 150 which form at their outer radius 120 a relatively small angle Θ with the direction of the flow.

A device or arrangement according to the invention comprises the turbine 101 which is able to operate at low pressure drops, similar to the kind of turbine which is used in air for the extraction of kinetic energy, that is a turbine with its axis parallel to the flow of water passing it, as shown in **Figs. 1a to 1c.**

Since this turbine 101 will be inserted into an outer structure, the blades 150a, 150b, 150c, 150d, can be connected with each other at their outer tips 115a, 115b, 115c, 115d to form a circumference 120. A generator 125 can than be connected to this circumference 120 instead of being connected to the axis 110 of the turbine 101 as shown in **Fig. 1b** (the configuration is similar to the one sometimes found in bicycles). In this way the generator 125 can run at a large angular velocity while the turbine itself is rotating at low angular velocity.

Given a certain velocity of the flow such a turbine 101 will rotate fast if it has few blades 150a, 150b, 150c, 150d and if the angle Θ between the blade 150 and the direction 160 of the flow is large (compare **Fig. 1c**). If the turbine instead is made of a large number of blades 150 with small angles Θ it will rotate at a slower angular velocity, extracting the same power from the fluid. Since $P=L\omega$ (L= angular momentum, $\omega$= angular velocity of rotation) for a given power P the angular momentum is large if $\omega$ is small.

Therefore, in the device or arrangement in accordance with the invention a slowly rotating turbine 101 is preferred because a turbine 101 with high angular momentum will start rotating already at relatively low velocities of the fluid flow. Furthermore a low speed of rotation helps to minimise turbulences and to avoid cavitation.

The preferred solution for the device or arrangement in accordance with the invention is that a turbine 101 consisting of a large number of blades 150 with small angles Θ. For a slowly rotating turbine 101 the design of the blades 150 does not need to be optimised; blades 150 of a very simple construction and shape might be used, keeping the costs of production low. For instance, the blades 150 could consist simply of bent metal plates. Also the use of a fast rotating generator 125 may help to reduce construction costs.

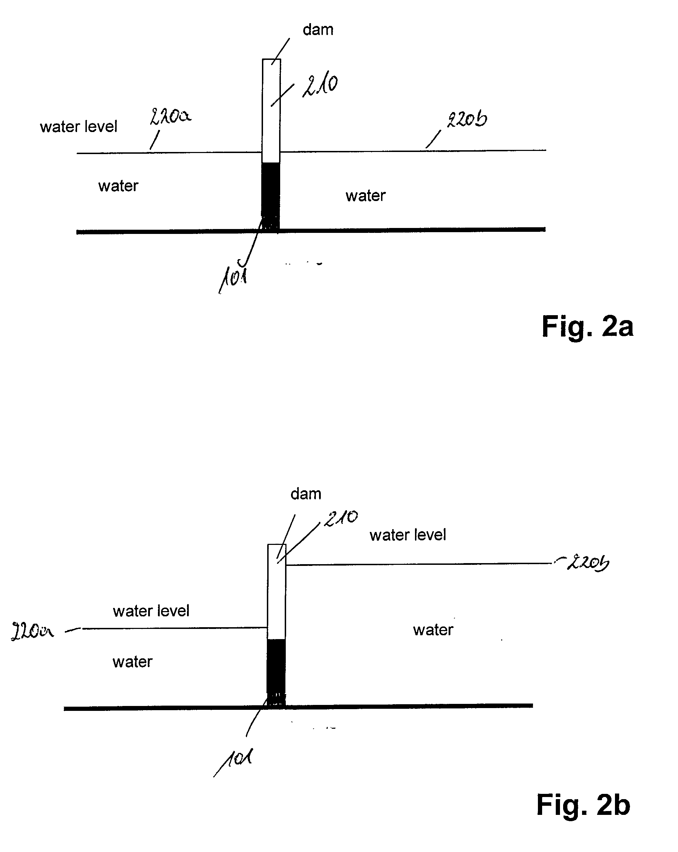

In difference to existing devices of this kind in the device or arrangement according to the invention the turbine 101 is inserted into a dam 210 as indicated in **Fig. 2.**

**Fig. 2** shows turbine 101 of the type described in **Fig. 1** inserted into a dam 210. If in first approximation energy losses in the flow (due to friction and turbulences) are ignored; the water levels 220a, 220b at both sides of the dam will be equal as long as the turbine 101 does not operate; see **Fig. 2a.** As soon as the turbine 101 rotates, it creates a pressure drop which will cause the built up of a higher water level 220b upstream of the turbine 101; see **Fig. 2b**.

We begin the discussion with a situation where there is a very low mass flow (= mass of fluid which is transported by the flow per unit time) in the flow of water, and correspondingly the water is passing the turbine 101 at very low speed. It is assumed (for the sake of demonstration) that this speed is low enough so that the turbine 101 does not yet start to rotate. In the absence of friction or turbulences the water levels 220a, 220b at both sides of the dam 210 will be equal. In a real device there will be turbulences and friction where the flow passes the turbine 101 even if the turbine 101 is not operating; this causes a slight pressure drop and therefore the water level 220b at the right side (water is flowing from the right to the left) of the dam 210 will be somewhat higher (not shown in the **Fig.**). We now increase the mass flow of the river and thereby the speed of the water in the river and in the turbine 101. As soon as the velocity of the flow in the turbine 101 is high enough to make the turbine 101 rotate, the turbine 101 will cause a pressure drop; the system will not be in equilibrium anymore.

Equilibrium will be achieved, when: (1) the mass flow through the turbine 101 is equal to the mass flow of the outer flow (of the river, for instance), and when (2) the pressure drop in the turbine 101 (at this mass flow) is equal to the pressure difference between the right and the left side of the dam 210 due to the gravitational potential. An example is shown in **Fig. 2b.**

If starting from an equilibrium situation the mass flow in the river increases, the water level 220b at the right will increase till again equilibrium is reached (this equilibrium is also reached as soon as water starts to run over the dam 210). If instead the mass flow decreases, the water level 220b at the right will also decrease. In the ideal case of a river of constant mass flow the height of the dam 210 and the properties of the turbine 101 would be selected such that the water level 220b just arrives at the top of the dam 210 in order to minimise the cost of construction.

Instead of allowing an overflow of the dam 210 occurring at exceptionally high mass flows due to the use of a turbine 101, it would also be poosible to make use of a turbine, the characteristics of which can be changed during operation for instance by changing the position of its blades 150 such that for a given pressure drop the flow of water through the turbine 101 can be varied.

In summary: A turbine 101 is inserted into a dam 210. The turbine 101 is constructed in such a way that - even starting from a situation where the mass flow in the river is zero and where there is no difference in the water levels 220a, 220b on both sides of the dam - the turbine 101 begins to operate as soon as the velocity of the water through the turbine 101 arrives at a value which is about as large as the one corresponding to the average mass flow of the river or lower. By means of its operation the turbine 101 itself will then create a difference Δh in the water levels on both sides of the dam 210 which is given by the actual mass flow in the river and the characteristics of the turbine 101.

To extract energy from water using a dam 210 of very low height Δh allows to produce power at places where the construction of a large dam 210 is not possible for geographical reasons. But also where the construction of a large dam 210 is possible from a geographic point of view, one still might prefer to substitute it by a sequence of low dams 210. As an example we mention the new Tehri-dam to be constructed in India, with a height of 260m, requiring the dislocation of about 100.000 people and being situated in a zone which is said to be not safe against earthquakes. Substituting such a dam by a sequence of low level constructions would yield the same power production.

We also note that in our scenario the mass flow in the river is not affected by the dam, there is no danger that parts of the river might fall dry because of the operation of the dam 210.

From a purely physics point of view it is not strictly necessary to distinguish between turbines 101 which extract kinetic energy or potential energy or to distinguish between reaction turbine 101 ("Reaktionsturbine") and impulse turbine 101 since in the general Bernoulli equation

$$p + \rho g \Delta h + 1/2 \rho v^2 = \text{constant}$$

both terms $\rho g \Delta h$ and $1/2 \rho v^2$ are present in the same way, and it is not really possible to extract kinetic energy without creating a pressure drop or to extract potential energy without the fluid moving through the turbine 101 at a certain speed. Our here proposed technical solution is a consequence of this fact.

However, our argument is not yet complete since till now we have only considered the situation at the turbine 101 itself, while for a complete picture the system of turbine plus dam 210 must be seen as a whole. It is the dam 210 which provides the pressure field acting on the turbine 101. For a complete discussion one therefore needs to apply our above mentioned arguments also to the dam 210 itself: Instead of constructing a dam 210 providing pressure $\rho g \Delta h$ it would as well be possible to provide a fast flowing fluid instead, creating a field of static pressure $1/2 \rho v^2$.

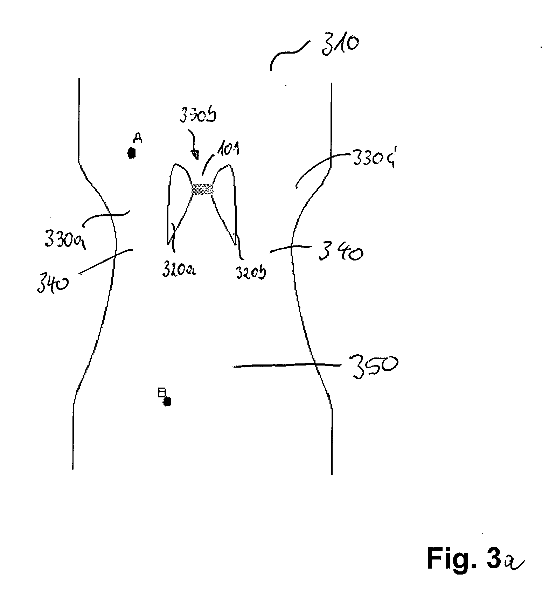

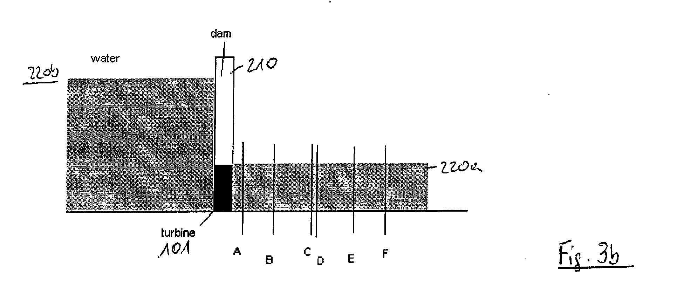

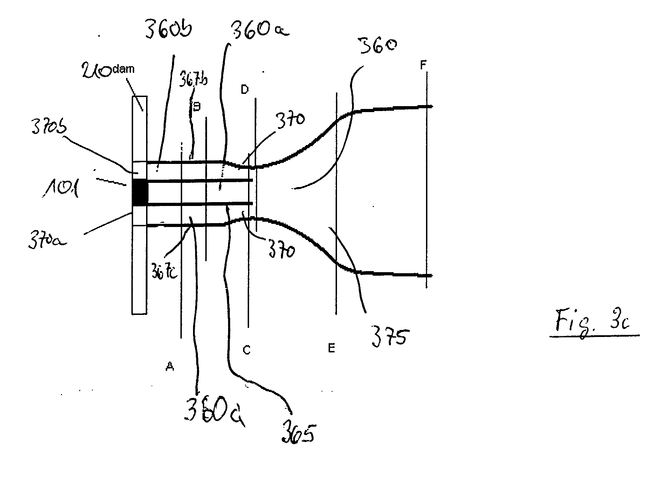

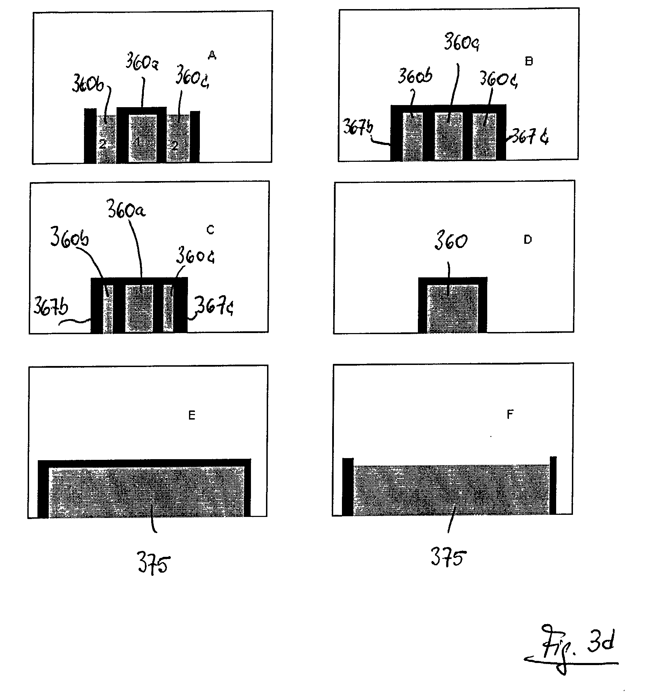

One way of how this technically can be achieved is shown in **Fig. 3a,** another one in **Figs. 3b, 3c,** and **3d.**

**Fig. 3a** shows a flow of water seen from above, for instance a river 310. Water is flowing in the figure in the direction from point (A) to point (B). Two material structures 320a, 320b are inserted into the river 310 and in between them there is the turbine 101 such that the structures 320a, 320b divide the flow of the river 310 into three parts 330a, 330b, 330c: A first part 330b of the flow enters in between the structures 320a, 320b and all of this flow passes the turbine 101. The second part 330a and the third part 330c of the flow are passing around the structures 320a, 320b and do not pass the turbine 101. Instead the flows 330a, 330c pass through a narrow section which is situated at the end of the structures 320a, 320b, indicated in the drawing of Fig. 3a as 340. In the region around location 340 the flows 330a, 330c have an increased velocity due to their reduced flow cross section. As a consequence their static pressure is decreased in the region indicated by 340. This field of low pressure will couple to that one of said first flow 330b and, consequently, it will reduce the pressure behind the turbine 101 (if the fist flow 330b behind the turbine 101 and in between the structures 320a, 320b is in an enclosure like a tube, the pressure in said tube will decrease if the flow there is instead having an open surface, then the pressure will decrease in the sense that the water level will fall). In consequence, the low pressure field of region 340 will increase the pressure drop at the turbine 101. In order to maintain the field of low pressure in region 340, the second and third flows 330a, 330c have to do work. In this sense it is possible to say that the turbine 101 is absorbing energy from flows 330a, 330c of water which are not passing through the turbine 101.

After having passed the narrow section 340 the total flow 330a plus 330b plus 330c enters into a region 350 of increased cross section and of higher static pressure. Since from all three flows 330a, 330b, 330c energy is absorbed while the velocity of the water before and after the device shown in **Fig. 3a** is not necessarily different it follows that the water level before the device (point A) will become higher than that after the device (point B).

The structures 320a, 320b preferably have a streamlined shape in order to minimise turbulences in the flow. Also the narrow section around area 340 preferably is formed in a streamlined way. The precise geometrical configuration of the device depends on the approximate shape of the river which one wants to use and of its mass flow, on the turbine 101 (its mass flow and its required operational pressure difference) and on the difference in water level 220a, 220b before and after the device which one wants to achieve, and in practice it can be obtained from fluidodynamic simulation programs as they are commonly used in industry (for instance

- the program "StarCD", for more information see in the Internet at URL=<http://www.cd.co.uk/>, or

- "Fluent" in the Internet at URL=<http://www.fluent. com/>, or

- "CFX" in the Internet at URL=<http://www.software. aeat.com/>, or

- "N3S" in the Internet at http://www.simulog.fr/;

and the corresponding user manuals as can be obtained from those companies.

The configuration corresponds to what has been described in Document EP-A2-0.935.068 in so far as an outer pressure field is produced behind a turbine by means of a fast flowing media. In difference to Document EP-A2-0.935.068 we now also foresee a difference in potential energy before and after the system shown in **Fig. 3a**: before the turbine 101 (for instance at point (A)) the water level is higher than after the turbine (point (B)) due to the action of the turbine. For the purpose of illustration it is possible to say that the turbine 101 by its action now is creating its own "dynamic dam" - the dam 210 is a static way of maintaining different water levels while the opening in **Fig. 3a** maintains a difference in the water levels in a dynamic way.

The device or arrangement in **Fig. 3a** is able to operate with its upper surface in free contact with the atmosphere, having therefore at its upper surface atmospheric pressure. Alternatively the device or arrangement could be covered and enclosed in a tubing system (not depicted).

The procedure and device presented here also could be combined with the kind of system which is usually applied in order to extract potential energy from water.

This is shown in **Figs. 3b, 3c,** and **3d. Figs. 3b** and **3c** show the device from the side and from above, respectively.

**Fig. 3d** shows sections (viewed in the direction of the water flow) along the axis indicated "A" to "F" in **Figs. 3b** and **3c**: a turbine 101 is inserted into a dam 210, extracting potential energy. The water which flows through the turbine 101 is indicated as a first flow 360a and it is carried away in a closed tube 365. The dam 210 has two openings 370a, 370b through which water exits from the dam 210 freely, this is indicated as second an third flows 360b, 360c, respectively. When exiting the dam 210 the surface of second and third flows 360b, 360c is open to the atmosphere and is at atmospheric pressure. The velocity of the water will be such that its kinetic energy is equal to the pressure energy it had before exiting the dam 210 (section A). In this way the pressure of the second and third water flows 360b, 360c gets de-coupled from the pressure of the water in the dam 210.

Next the water second and third flows 360b, 360c do enter a closed tube 367b, 367c and get so decoupled from the atmospheric pressure (section B), first without any change in the cross section of the second and third flows 360b, 360c. Next the now enclosed second and third flows 360b, 360c do enter a region 370 of low cross section and therefore increased velocity and decreased static pressure (section C). Approximately where the cross section of the second and third flows 360b, 360c get smallest, the tube 365 which had up to this point enclosed the first flow 360a ends. Now all the flows 360a, 360b, 360c get into contact (section D) with each other. The combined flow 360 is entering now a region 375 of increasing cross section, the combined flow 360 always remaining enclosed (section E). Finally, when its pressure again has increased to approximately atmospheric pressure, the combined flow 360 exits the enclosure (section F).

In analogy to what has been discussed for **Fig. 3a**, this system again results in an increased pressure drop at the turbine 101. As a consequence it allows to operate a turbine 101 at a pressure drop which is larger than what corresponds to the height of the dam 210. As a result it allows, given a dam 210 of a certain height, to equip it with a turbine 101 which operates at a pressure which is larger than what corresponds to the height of the dam 210 and a reduced mass flow through the turbine 101. Consequently the turbine 101 used in this configuration can also be of the conventional type of turbine 101 which extracts potential energy from the water (for instance Kaplan turbine).

It is also possible to arrange the tubed portions of said flows 360a, 360b, 360c in a stack-like manner collateral in an vertical arrangement.

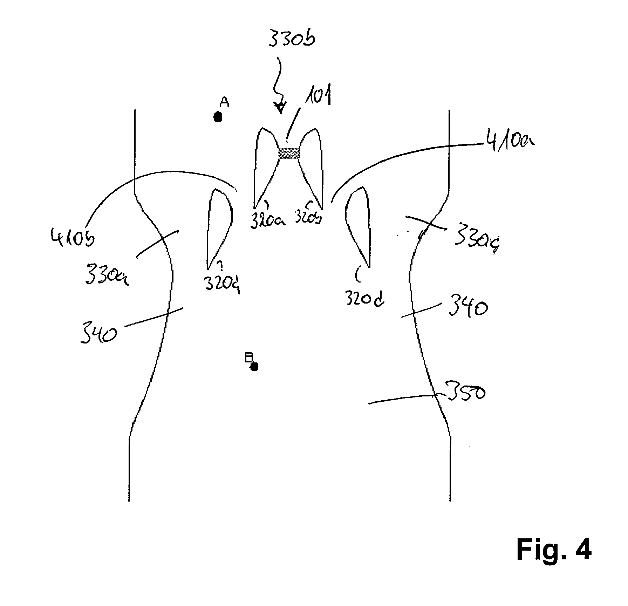

Following the arguments explained in Document EP-A2-0.935.068, this system can be extended as shown in **Fig. 4. Fig. 4** extends the situation of **Fig. 3** by adding additional structures 320c, 320d within flows 330a, 330c of **Fig. 3a** creating additional flow channels 410a, 410b, resulting in an increased pressure drop at the turbine 101 and therefore in an increased power of the turbine 101.

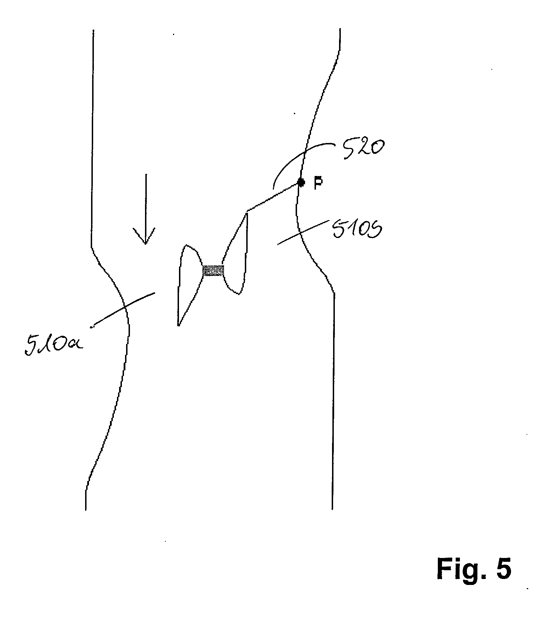

**Figs. 3** and **4** refer to the situation in a river where the direction of flow never changes. In order to make use of the tidal current into a bay (which changes direction with the high and low tide), a structure as indicated in **Fig. 5** could be used where one of the flow channels 510a, 510b is closed by a shutter 520 consisting of a door which is opened and closed by the current. Instead it would also be possible to construct two devices as shown in **Fig. 3** or **Fig. 4**, oriented in opposite directions, where one of them is blocked depending on the direction of the current.

**Figs. 3** to **5** indicate a streamlined shape of the flow which minimises turbulences. If the shape of the flow is not optimised (for instance in order to save construction costs), the system will still work, though at a somewhat lower efficiency.

**Fig. 5**: Asymmetric configuration which allows to use flows of changing direction. Depending on the direction of the flow, part of the device is blocked.

The "dynamic dam" has several advantages:

- First, it allows the use of a relatively small turbine 101 since the turbine 101 through the pressure field extracts energy also from the flow of water which does not pass through it.

- Secondly, there may be situations where one cannot easily construct a dam 210 either for geographic reasons or because one does not want to block ship traffic. Ships can pass the construction without disturbing the energy production as long as the flow velocities of the current are not too high, or, in the case of a tidal power plant, when tides change.

- Third, the system always allows migration of fish downstream and also upstream, provided the flow velocity in the narrow section of the channels (**Fig. 3**, point (c)) is not too high. If the velocity of the flow there is too high, fish could not migrate upstream during normal operation of the device or arrangement. However, one could at times where there is a reduced demand for power or at times when there are migrating fish, switch off the turbine. In addition one may partially block the flow in one of the channels where the cross section of the channel is large: this will slow down the flow in the narrow part of the channel.

As a consequence fish would find a way through the system also in the upstream direction.

**Claims**

1. Arrangement to extract energy from a flow of fluid,

   • comprising a turbine (101) adapted to extract kinetic energy from the flow,
   • said turbine (101) being inserted into a dam (210), and
   • said turbine (101) having operational characteristics such that due to the operation of the turbine (101) a difference of the water levels on both sides of the dam (210) before and after the turbine (101) is created.

2. Arrangement according to claim 1, **characterised in that**

   • the flow of fluid is spatially divided into a first flow (360a) of fluid flowing through the turbine (101) and at least one second flow (360b, 360c) not flowing through the turbine (101);
   • the at least one second flow (360b, 360c) being adapted to create a field of lower pressure behind the turbine (101) by means of an accelerated flow of liquid.

3. Arrangement to extract energy from a flow of fluid,

   • comprising a turbine (101) which is adapted to extract kinetic energy from the flow,
   • said turbine (101) being inserted into a spatial structure of fluid flow which is adapted to create a field of low pressure behind the turbine (101) by means of an accelerated flow of liquid such that a difference in the height of the level of the surface of the fluid is maintained before and after the turbine (101).

4. Arrangement to extract energy from a flow of fluid

   • comprising a turbine (101) which is adapted to extract potential energy from the flow,
   • said turbine (101) being inserted into a spatial structure of fluid flow which is adapted to create a field of low pressure behind the turbine (101) by means of an accelerated flow of liquid such that a difference in the height of the level of the surface of the fluid is maintained before and after the turbine (101).

5. Arrangement according to claim 3 or 4,

   • **characterised by** at least one flow deflection element (320) inserted into the fluid flow,
   • the at least one flow deflection element (320) being adapted create the field of low pressure behind the turbine (101) by means of an accelerated flow of liquid such that said difference in the height of the level of the surface of the fluid is maintained before and after the turbine (101).

6. Arrangement according to claim 5, **characterised by** two flow deflection elements (320a, 320b) inserted collaterally on one side of the turbine (101) and on the other side of the turbine (101), respectively, into the fluid flow.

7. Arrangement according to claim 3 or 4,

   • **characterised by** at least one group of flow deflection elements (320) inserted into the fluid flow,
   • the at least one group of flow deflection elements (320) being adapted create the field of low pressure behind the turbine (101) by means of an accelerated flow of liquid such that said difference in the height of the level of the surface of the fluid is maintained before and after the turbine (101).

8. Arrangement according to claim 7, **characterised by** at two groups of flow deflection elements (320a, 320b, 320c, 320d), both groups inserted collaterally on one side of the turbine (101) and on the other side of the turbine (101), respectively, into the fluid flow.

9. Arrangement according to claim 8, **characterised in that** each group of flow deflection elements comprises two flow deflection elements (320a, 320c; 320b, 320d).

10. Arrangement according to one of claims 5 to 9, **characterised in that** each of the flow deflection elements (320) having at least a first surface oriented towards the turbine (101) and a second surface oriented in the direction opposite to the orientation of the first surface; the first and second surfaces adapted in accordance with Bernoulli's law such that the field of low pressure is created in the proximity of the first surface.

11. Arrangement according to one of claims 1 to 10, **characterised in that** the fluid flow is maintained within rigid boundaries, the cross section of the flow in a region downstream of the turbine (101) being reduced relative to the cross section in a region upstream of the turbine (101).

**12.** Method of extracting energy from a flow of fluid by means of a turbine (101), the turbine (101) being adapted to extract kinetic energy from the flow, **characterised in that**

- the flow being adapted to create a field of low pressure behind the turbine (101) by means of an accelerated flow of liquid such that a difference in the height of the level of the surface of the fluid is maintained before and after the turbine (101).

**13.** Method of extracting energy from a flow of fluid by means of a turbine (101), the turbine (101) being adapted to extract potential energy from the flow, **characterised in that**

- the flow being adapted to create a field of low pressure behind the turbine (101) by means of an accelerated flow of liquid such that a difference in the height of the level of the surface of the fluid is maintained before and after the turbine (101).

**Fig. 1a**

Fig. 1b

150

H

~160

**Fig. 1c**

dam

210

water level  220a    220b

water    water

101

**Fig. 2a**

dam

210

water level  220b

water level

220a    water

water

101

**Fig. 2b**

330b

101

A

330c

310a   320b

330a

340

340

350

**Fig. 3**a

Fig. 3b

Fig. 3c

Fig. 3d

**Fig. 4**

520

P

510s

510a

**Fig. 5**

**European Patent Office**

## EUROPEAN SEARCH REPORT

Application Number

EP 01 11 8275

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | EP 0 921 308 A (LAGERWEY WINDTURBINE B V)<br>9 June 1999 (1999-06-09)<br>* claims 1-3; figures * | 1,3,4,<br>12,13<br>2,5-11 | F03B17/06<br>F03B13/18 |
| Y | PATENT ABSTRACTS OF JAPAN<br>vol. 012, no. 141 (M-691),<br>28 April 1988 (1988-04-28)<br>& JP 62 261676 A (YUKIMARU SHIMIZU;OTHERS:<br>01), 13 November 1987 (1987-11-13)<br>* abstract * | 2,5-11 | |
| X | GB 2 235 252 A (LEWIS GEOFFREY EDWARD)<br>27 February 1991 (1991-02-27)<br>* abstract *<br>* page 3, line 3 - line 8; figures 1,2 * | 1-5 | |
| A,D | EP 0 935 068 A (GRASSMANN HANS)<br>11 August 1999 (1999-08-11)<br>* abstract; figures * | 5-10 | |
| A | US 4 868 408 A (HESH FRANK)<br>19 September 1989 (1989-09-19)<br>* abstract; figure 1 * | 11 | TECHNICAL FIELDS<br>SEARCHED (Int.Cl.7)<br><br>F03B |
| A | A.R. INVERSIN: "Micro-Hydropower<br>Sourcebook"<br>1986 , NRECA INT. FOUNDATION , ARLINGTON,<br>USA XP002183558 218860<br>*"Velocity-head rod " heading, pp 13-14 *<br>*Heading "In-stream or water-current<br>turbine", pp. 187-189 * | 1,12,13 | |

The present search report has been drawn up for all claims

| Place of search | Date of completion of the search | Examiner |
|---|---|---|
| THE HAGUE | 21 November 2001 | Criado Jimenez, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 11 8275

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2001

| Patent document cited in search report | | Publication date | Patent family member(s) | | Publication date |
|---|---|---|---|---|---|
| EP 0921308 | A | 09-06-1999 | EP | 0921308 A2 | 09-06-1999 |
| | | | NL | 1010704 C2 | 03-06-1999 |
| | | | NL | 1011283 C2 | 13-07-1999 |
| | | | NL | 1011283 A1 | 07-06-1999 |
| JP 62261676 | A | 13-11-1987 | NONE | | |
| GB 2235252 | A | 27-02-1991 | AU | 7232091 A | 21-08-1991 |
| | | | WO | 9111614 A1 | 08-08-1991 |
| EP 0935068 | A | 11-08-1999 | IT | UD980010 A1 | 04-08-1999 |
| | | | EP | 0935068 A2 | 11-08-1999 |
| US 4868408 | A | 19-09-1989 | NONE | | |

EPO FORM P0459

For more details about this annex : see Official Journal of the European Patent Office, No. 12/82